Europäisches Patentamt

European Patent Office

Office européen des brevets

(11) Publication number: **0 123 429**
**B1**

(12) **EUROPEAN PATENT SPECIFICATION**

(45) Date of publication of patent specification: **19.08.87**

(21) Application number: **84301945.6**

(22) Date of filing: **22.03.84**

(51) Int. Cl.⁴: **H 02 G 15/00, H 02 G 15/10,**
**C 08 K 3/22, C 09 D 5/18,**
**H 01 B 3/44**

(54) **Cast cable connection.**

(30) Priority: **25.03.83 DE 3310880**

(43) Date of publication of application:
**31.10.84 Bulletin 84/44**

(45) Publication of the grant of the patent:
**19.08.87 Bulletin 87/34**

(84) Designated Contracting States:
**AT BE CH FR GB IT LI NL SE**

(56) References cited:
**EP-A-0 004 017**
**EP-A-0 017 002**
**EP-A-0 017 609**
**WO-A-82/04419**
**DE-A-2 415 639**
**US-A-4 018 962**

**IEEE TRANSACTIONS ON INDUSTRY**
**APPLICATIONS, vol. IA-17, no. 4, July/August**
**1981, pages 376-381, New York, USA; R.H.**
**KING: "Laboratory evaluation of underground**
**coal mine trailing cable splices"**

(73) Proprietor: **MINNESOTA MINING AND**
**MANUFACTURING COMPANY**
**3M Center, P.O. Box 33427**
**St. Paul, Minnesota 55133-3427 (US)**

(72) Inventor: **John, Günther c/o Minnesota Mining**
**and**
**Manufacturing Company 2501 Hudson Road**
**P.O. Box 33427 St. Paul Minnesota 55133 (US)**

(74) Representative: **Baillie, Iain Cameron et al**
**c/o Ladas & Parry Isartorplatz 5**
**D-8000 München 2 (DE)**

Courier Press, Leamington Spa, England.

## Description

Field of the invention

The invention relates to a cast cable connection consisting of a plastic wrapping and a moldable synthetic resin cable splice.

Background art

Synthetic resins have found a variety of applications due to their excellent processing and application-technological properties. However, except for halogen-containing resins, such as polyvinyl chloride and poly(tetrafluoroethylene) which are self-extinguishing, synthetic resins typically are flammable and support flaming combustion. For the purpose of overcoming this disadvantage, the resins are usually admixed with fire-retardant additives, the most common thereof being compounds which contain halogen, phosphorus and antimony. At elevated temperatures, these compounds split off their respective acids which effectively inhibit a continuation of flaming combustion.

In regard to the voluminous pertinent patent literature in this area, the following patents shall be cited as examples, e.g., German (OS) 15 69 123 disclosing antimony oxychloride as a fire-retardant additive and German (OS) 14 94 922 disclosing the addition of phosphine and phosphoric acid compositions.

However, fire retardants capable of splitting off an acidic compound have the obvious disadvantage that such acids are corrosive, thus possibly causing damage or destruction of electrical or electronic components, including electrical cables. Furthermore, it should be mentioned that resins rendered flame-retardant in such a manner will typically generate a considerable amount of smoke which will obviously interfere with fire-fighting and rescue operations. Besides, as determined in more recent studies, the combustion products of flame-retardant resins exhibit a considerable degree of toxicity.

According to German Patent 27 39 429, attempts have been made to resolve these disadvantages by adding an inorganic magnesium compound, an alkali chloride and an inorganic tin or vanadium compound to the synthetic resin. Besides the fact that tin and vanadium compounds represent a significant cost factor, the presence of alkali chloride, which is necessary for achievement of satisfactory flame-retardancy, cannot entirely eliminate the aforementioned disadvantages. The use of borates as flame-retardant additives has been described in the German (AS) 17 69 312. Admittingly, borates do not form a corrosive acid, but the flame-retardant effect therefrom is relatively weak, requiring the addition of another fire-retardant agent, such as antimony oxide.

EP—A—17002 should also be mentioned, wherein the use of aluminum hydroxide as a halogen-free flame-retardant is described for copolymers of polyolefins and synthetic rubbers, using, as the case may be, a combination of magnesium carbonate. However, only those types of synthetic resins which permit incorporation of fillers and additives on a roller-mill can be used for admixing, without difficulties, the necessary large amounts of these flame-retardant additives.

It is known from document EP—A—17609 to provide a cable with a molded insulating layer of an intumescent material between the outer wrapping and the cable itself. In the event of a fire the material foams. No resistance is offered by the outer wrapping because it softens in the heat.

Due to the non-availability of a suitable flame-retardant for molded plastic cable splices, such types of cable connections cannot be used in critical areas, in particular in electrical and electronic devices. Therefore, with reference to new installations, the result is that excessive lengths of cable will be consumed and, even more serious, no repair work is possible if cable damage occurs. The entire length of the damaged cable has to be replaced. Such an excessively high cable consumption is, however, uneconomical and cannot be justified.

Therefore, the present invention deals with the preparation of a cast cable connection consisting of a plastic wrapping and a molded cable splice comprising synthetic resins. This cable connection will not form corrosive products when exposed to fire and will not generate toxic by-products of combustion, but the fire-resistance thereof will be at least equal to that of resins prepared with halogen-containing fire-retardant additives. In case of fire, the cable connection will retain its function over a sufficiently long period of time.

A fire protective tape is known from document WO82/4419. This tape is halogen-free and includes hydrated solids having chemically bonded water. On exposure to fire the material of the tape foams forming an insulating body. This document concerns only a single element system, i.e. only a tape, and not a composite cable connection consisting of a molded splice in addition to the wrapping.

According to the present invention there is provided a cast cable connection including a molded plastics material cable splice formed from a two-component halogen-free synthetic resin material based on epoxy and/or polyester resins hardenable at room temperature, and containing a fire-retardant additive that does not generate toxic and/or corrosive products if exposed to fire, and a plastics material wrapping comprising a halogen-free material capable of maintaining an essentially continuous coat-like structure when exposed to fire without generating any toxic and/or corrosive products, formed of either *i.* thermoplastic or thermoelastic resins and containing at least one additive capable of forming a foamy coating structure on exposure to fire, or *ii.* at least one thermosetting resin material capable of becoming charred on exposure to fire. In the case of fire the plastic wrapping will hold the molded cable splice in place assuring its function, i.e., a connection of the cable wires, and will protect the splice from being exposed to flames.

According to a preferred form of execution of the invention, the plastic wrapping consists at least of one type of synthetic resin containing at least one additive capable of forming a foamy coating structure upon exposure to fire. This synthetic resins material may be a thermoplastic or a thermoelastic (cross-linked) resin or a mixture of two or several resins from each of these classes. The preferred synthetic resin materials are thermoelastic cross-linked polymers such as modified polyolefins and similar resins, in particular cross-linked polypropylene. Thermoplastic resins, such as polypropylene, polyethylene and olefin copolymers, are particularly preferred for economical reasons.

According to another preferred form of execution of the invention, the plastic wrapping consists at least of one type of synthetic resin selected from the class of thermosetting resins such as melamine resins capable of retaining a coat-like structure upon exposure to fire.

Additives for the thermoplastic or thermoelastic resins may be any or mixtures of known propellants or blowing agents capable of splitting off nitrogen, such as melamine.

In case of fire, the blowing agent becomes active, which means nitrogen is split off, which is the best flame-retardant as commonly known. The plastic wrapping will expand while maintaining its coat-like structure and a sufficient dimensional strength. In other words, the plastic wrapping does not melt away, which would result in exposure of the molded cable splice. The coat-like structure also exhibits poor heat conductivity thereby insuring long-lasting protection of the cable splice beneath the wrapping.

According to a particularly preferred form of execution of the invention, the moldable cable splice resin contains aluminum hydroxide as the fire-retardant additive. The aluminum hydroxide preferably has a mean particle size from 8 to 60 micrometers, since such a particle size distribution allows for a particularly well homogenized dispersion in the resin. However, the mean particle size of the aluminum hydroxide may be outside of the aforementioned range without detracting from the flame-retardant effect thereof. The amount of aluminum hydroxide to be admixed is preferably in the range from about 50 to about 200 parts by weight in relation to the resin material.

To improve the fire-retardant properties even further, another form of execution of the invention deals with an additional admixing of a basic magnesium carbonate as a fire-retardant agent. The basic magnesium carbonate may be added in amounts from 5 to 100 percent by weight based on the resin material. Decreasing amounts reduce desired fire-retardancy. On the other hand, exceeding the upper limit is not recommended for process-technological reasons.

Up to now, it has not been possible to incorporate such large amounts of aluminum hydroxide into a two-component molding resin. If successful, the obtained resins could not be stored but had to be immediately processed, because the aluminum hydroxide particles tend to settle relatively fast. In order to bind eventually present residual moisture, another form of execution of the invention deals with the addition of a molecular sieve compound to the cable molding resin, such as an alkali- or earth/alkali-aluminum silicate. Due to the binding of the moisture, no change of the pH-value and/or the viscosity of the molding resin composition will occur prior to processing, which is extremely important with regard to storability.

The difficulties owing to sedimentation properties are eliminated by the addition of a wetting agent to the cable molding composition according to another preferred form of execution. This wetting agent is added in amounts from about 0.1 to 2 percent by weight. The wetting agent will displace moisture and air present on the surface of the solid additive particles and will assure perfect wetting. Any one of many known wetting agents may be employed, for example anionic wetting agents such as an alkyl sulfonate or alkyl sulfate; cationic wetting agents such as quaternary ammonium salts as obtained by alkylating long-chained tertiary amines; and non-ionic wetting agents, e.g., alkylene oxide adducts to fatty alcohols. Particularly preferred wetting agents are organo-functional silanes and quaternary ammonium salts. They exhibit particularly good wettability for aluminum oxide hydrates and basic magnesium carbonate.

Furthermore, the cable molding resin may also contain additional additives for improving processability, such as plasticizers and curing agents. Any of the known plasticizers and also any of the known hardeners or curing agents suitable for the employed resin composition may be used. With regard to epoxy resins, aliphatic or cycloaliphatic polyamines are suitable; with regard to polyester resins, peroxides are suitable.

The invention will now be further explained by the following examples without, however, limiting the scope of the invention thereto.

**0 123 429**

Example 1

A cable molding resin was prepared from a cold-hardenable two-component resin mix of the following composition:

| Component 1 | Parts by weight |
|---|---|
| Epoxy resin | 41.25 |
| Byk W 960, a Wetting Agent, available from Byk-Gulden Co. | 0.57 |
| Molecular sieve | 1.48 |
| Aluminum hydroxide | 51.20 |
| Basic magnesium carbonate | 5.20 |
| | 100.00 |

| Component 2 | Parts by weight |
|---|---|
| N-aminoethylpiperazine | 18.70 |
| PH 3/a5, a plasticizer available from the VfT Co. | 19.70 |
| Byk W 960 a wetting agent available from Byk-Gulden Co. | 0.70 |
| Molecular sieve | 1.85 |
| Aluminum hydroxide | 52.20 |
| Basic magnesium carbonate | 5.85 |
| | 100.00 |

The two components were mixed by blending 50 parts by weight of component 2 with 100 parts by weight of component 1. Then, the cable wrapping was prepared by employing a melamine molding resin, type F 2210 of the Bakelite Company, into which the cable molding mix was poured.

Example 2

A cable molding resin was prepared from a cold-hardenable two-component resin mix of the following composition:

| Component 1 | Parts by weight |
|---|---|
| Epoxy resin | 30.00 |
| Byk W 960, a wetting agent available from Byk-Gulden Co. | 0.62 |
| Molecular sieve | 1.70 |
| Aluminum hydroxide | 52.00 |
| Basic magnesium carbonate | 15.68 |
| | 100.00 |

| Component 2 | Parts by weight |
|---|---|
| Isophoronediamine | 13.50 |
| PH 3/a5, a plasticizer available from the Vft Co. | 28.50 |
| Byk W 960, a wetting agent available from Byk-Gulden Co. | 0.55 |
| Molecular sieve | 1.80 |
| Aluminum hydroxide | 20.25 |
| Basic magnesium carbonate | 35.40 |
| | 100.00 |

The two components were mixed blending 55 parts by weight of component 2 with 100 parts by weight of component 1. This cable resin mix was poured into a cable wrapping of polypropylene, type Moplen ×94 J of the Montepolimeri Company.

4

**Example 3**

Example 2 was repeated but a cable wrapping of polypropylene type Moplen ×94 J/N of the Montepolimeri Company, was used.

**Example 4**

A cable molding resin was prepared from a cold-hardenable two-component resin mix of the following composition:

| Component 1 | Parts by weight |
|---|---|
| Polyester resin | 40.00 |
| Byk W 920, a wetting agent available from the Byk-Gulden Co. | 0.50 |
| Molecular sieve | 1.50 |
| Aluminum hydroxide | 48.00 |
| Basic magnesium carbonate | 9.00 |
| One percent by weight solution of cobalt octoate | 0.10 |
| | 100.00 |

| Component 2 | Parts by weight |
|---|---|
| Methyl ethyl ketone peroxide | 100.00 |

**Example 5**

Example 4 was repeated with the exception that a wrapping of polypropylene, type Moplen ×94 J/N was used which was cross-linked by means of peroxides.

Cable connections prepared according to the aforementioned examples were exposed to an open flame. There was practically no smoke generation. The cable wrapping retained its coat-like structure. The escaping gases displayed no corrosive effects.

A cast cable connection according to the invention meets the requirements insofar as no corrosive products, no toxic products and also practically no smoke are formed in case of fire or on exposure to elevated temperatures. Due to the combined effects of high flame resistance and the heat-barrier formed by the coat-like wrappings around the cable cast, the functions of the cable within the cable splice remain intact over a sufficiently long period of time. Therefore, a cast cable connection can now also be employed in those electric installations where improved flame resistance in event of fire is necessary.

**Claims**

1. A cast cable connection including
a molded plastics material cable splice formed from a two-component halogen-free synthetic resin material based on epoxy and/or polyester resins hardenable at room temperature, and containing a fire-retardant additive that does not generate toxic and/or corrosive products if exposed to fire.
and a plastics material wrapping comprising a halogen-free material capable of maintaining an essentially continuous coat-like structure when exposed to fire without generating any toxic and/or corrosive products, formed of either
i. thermoplastic or thermoelastic resins and containing at least one additive capable of forming a foamy coating structure on exposure to fire, or
ii. at least one thermosetting resin material capable of becoming charred on exposure to fire.

2. A connection according to claim 1 wherein said wrapping includes a material selected from the group consisting of melamine resins, polypropylene and cross-linked polypropylene and mixtures thereof.

3. A cable connection according to claim 1 or 2 wherein said plastic cable splice further contains aluminum hydroxide.

4. A cable connection according to claim 3 wherein said aluminum hydroxide has a particle size from about 8 to about 60 micrometers.

5. A cable connection according to claim 3 or 4 wherein said plastic cable splice contains about 50 to about 200 parts by weight aluminum hydroxide per 100 parts by weight resin.

6. A cable connection according to any preceding claim wherein said plastic cable splice contains about 5 to about 100 parts by weight of basic magnesium carbonate per 100 parts by weight resin.

7. A cable connection according to any preceding claim wherein said plastic cable splice contains about 0.1 to about 2 percent by weight of a wetting agent.

8. A cable connection according to claim 7 wherein said wetting agent is selected from the group consisting of organo-functional silanes and quaternary ammonium salts.

9. A cable connection according to any preceding claim wherein said plastic cable splice contains processing additives selected from the group consisting of molecular sieves, plasticizers, and hardening agents.

**Patentansprüche**

1. Gegossene Kabelverbindung mit
einer aus formgepreßtem Kunststoff bestehenden Kabelspleiße, die aus einem halogenfreien Zweikomponenten-Kunstharzmaterial auf der Grundlage von bei Zimmertemperatur härtbaren Epoxid- und/oder Polyesterharzen hergestellt ist und einen feuerhemmenden Zusatzstoff enthält, der unter der Einwirkung eines Feuers keine toxischen und/oder korrosiven Produkte bildet, und
eine aus Kunststoff bestehende Umhüllung, die mindestens teilweise aus einem halogenfreien Material besteht, das geeignet ist, unter der Einrwirkung eines Feuers im Zustand eines im wesentlichen ununterbrochenen, überzugsartigen Gebildes zu verbleiben, ohne jegliche toxische und/oder korrodierend wirkende Produkte zu bilden und das aus
i. thermoplastischen oder thermoplastischen Harzen besteht und mindestens einen Zusatzstoff besteht, der geeignet ist, under der Einwirkung eines Feuers einen schaumartigen Überzug zu bilden, oder
ii. mindestens einem thermostatischen Harzmaterial besteht, das geeignet ist, unter der Einwirkung eines Feuers zu verkohlen.
2. Kabelverbindung nach Anspruch 1, dadurch gekennzeichnet, daß die Umhüllung ein Material enthält, das aus der Gruppe ausgewählt ist, die aus den Melaminharzen, dem Polypropylen und dem vernetzten Polypropylen und den Gemischen derselben besteht.
3. Kabelverbindung nach Anspruch 1 oder 2, dadurch gekennzeichnet, daß die Kabelspleiße aus Kunststoff ferner Aluminiumhydroxid enthält.
4. Kabelverbindung nach Anspruch 3, dadurch gekennzeichnet, daß das Aluminiumhydroxid eine Korngröße von etwa 8 bis etwa 60 µm hat.
5. Kabelverbindung nach Anspruch 3 oder 4, dadurch gekennzeichnet, daß die Kabelspleiße aus Kunststoff etwa 50 bis etwa 200 Gewichtsteile Aluminiumhydroxid pro 100 Gewichtsteile Harz enthält.
6. Kabelverbindung nach einem der vorhergehenden Ansprüche, dadurch gekennzeichnet, daß die Kabelspleiße aus Kunststoff etwa 5 bis etwa 100 Gewichtsteile basisches Magnesiumcarbonat pro 100 Gewichtsteile Harz enthält.
7. Kabelverbindung nach einem der vorhergehenden Ansprüche, dadurch gekennzeichnet, daß die Kabelspleiße aus Kunststoff etwa 0,1 bis etwa 2 Gew.% eines Netzmittels enthält.
8. Kabelverbindung nach Anspruch 7, dadurch gekennzeichnet, daß das Netzmittel aus der Gruppe ausgewählt ist, die aus den organofunktionellen Silanen und den quaternären Ammoniumsalzen besteht.
9. Kabelverbindung nach einem der vorhergehenden Ansprüche, dadurch gekennzeichnet, daß die Kabelspließe aus Kunststoff die Verarbeitung erleichternde Zusatzstoffe enthält, die aus der Gruppe ausgewählt sind, die aus den Molekularsieben, Weichmachern und Härtern besteht.

**Revendications**

1. Raccordement pour câble comprenant
une ligature pour câble en plastique moule formée d'une matière plastique exempt d'halogène à deux composants à base de résines époxy et/ou polyester durcissables à la température ambiante, et contenant un additif ignifuge qui ne génère pas de produits toxiques et/ou corrosifs lors de l'exposition au feu,
une enveloppe en matière plastique comprenant un matériau exempt d'halogène capable de maintenir une structure essentiellement continue analogue à un revêtement quand elle est exposée au feu sans génération de produits toxiques et/ou corrosifs, à base
(i) sont de résines thermoplastiques ou thermoélastiques et contenant au moins un additif capable de former une structure de revêtement sous forme de mousse lors de l'exposition au feu,
(ii) soit d'au moins une résine thermodurcissable capable de se carboniser lors de l'exposition au feu.
2. Raccordement pour câble suivant la revendication 1, dans lequel ladite enveloppe comprend une substance choisie parmi l'ensemble constitué par les résines de mélamine, le polypropylène, le polypropylène réticulé et leurs mélanges.
3. Raccordement pour câble suivant la revendication 1 ou 2, dans lequel la ligature pour câble en plastique contient en outre de l'hydroxyde d'aluminium.
4. Raccordement pour câble suivant la revendication 3, dans lequel l'hydroxyde d'aluminium a une granulométrie d'environ 8 à environ 60 µm.
5. Raccordement pour câble suivant la revendication 3 ou 4, dans lequel ladite ligature pour câble en matière plastique contient d'environ 50 à environ 200 parties en poids d'hydroxyde d'aluminium pour 100 parties en poids de résine.
6. Raccordement pour câble suivant l'une quelconque des revendications précédentes, dans lequel ladite ligature pour câble en matière plastique contient d'environ 5 à environ 100 parties en poids de carbonate basique de magnésium pour 100 parties en poids de résine.
7. Raccordement pour câble suivant l'une quelconque des revendications précédentes, dans lequel

6

ladite ligature pour câble en matière plastique contient d'environ 0,1 à environ 2% en poids d'agent mouillant.

8. Raccordement pour câble suivant la revendication 7 dans lequel l'agent mouillant est choisi parmi l'ensemble constitué par les silanes organo-fonctionnels et les sels d'ammonium quaternaire.

9. Raccordement pour câble suivant l'une quelconque des revendications précédentes, dans lequel ladite ligature pour câble en matière plastique contient des additifs de fabrication choisis parmi l'ensemble constitué par les tamis moléculaires, les plastifiants et les agents de durcissement.